# EUROPEAN PATENT APPLICATION

(11) **EP 1 903 253 A2**
(43) Date of publication of application: **26.03.2008**
(21) Application number: 07018784.4
(22) Date of filing: 25.09.2007
(51) Int. Cl.: F16G 13/06

(54) **Oil-free chain**

(30) Priority: 25.09.2006 JP 2006259030
(71) Applicant: Tsubakimoto Chain Co., Kita-ku Osaka 530-0005 (JP)
(72) Inventor: Nakagawa, Takashi, Osaka 530-0005 (JP); Ishida, Hiroki, Osaka 530-0005 (JP)
(74) Representative: Ullrich & Naumann

(57) **Abstract**

In an oil-free roller chain rollerless bushing (130), bushing (130) protrude outward past the inner link plates (110) and are received in supporting bores formed in the inner faces of the outer linkplates (150), the bores being coaxial with the holes in which the connecting pins of the chain are press-fit. The relationship between the protruding parts of the bushings (130) and the supporting bores establishes a labyrinth that resists leakage of lubricating oil from the space between the pin and the interior of the bushing. The mutually facing overlapping faces of the plates of the chain are have roughened surfaces that also form a labyrinth structure that further resists oil leakage. A groove formed in the connecting pin allows for an increased supply of sealed lubricating oil.

## Description

### CROSS-REFERENCE TO RELATED APPLICATION

This application claims priority from Japanese patent application 2006-259030, filed September 25, 2006. The disclosure of Japanese patent application 2006-259030 is incorporated by reference.

### FIELD OF THE INVENTION

This invention relates to an "oil-free" chain, for use as a power transmitting roller chain, a transfer conveyor chain, or the like. The invention relates more specifically to an oil-free roller chain or rollerless bushing chain comprising pairs of inner plates and pairs of outer plates in alternating, overlapping relationship along the length of the chain. In such a chain a pair of bushings for each pair of inner plates are press-fit into bushing holes in the inner plates, and a pair of pins for each pair of outer plates are press-fit into pin holes in the outer plates. Each pin has an outer surface, and extends through, and fits loosely in, one of the bushings. The term "oil free" does not imply the complete absence of lubricant, but rather the presence of a permanent internal lubricant. In an oil-free chain, lubricating oil is sealed between the inner circumferential surface of each bushing and the outer circumferential surface of the connecting pin that extends through the bushing.

### BACKGROUND OF THE INVENTION

Japanese Laid-Open Patent Publication No. 2004-256262 describes a known seal chain in which lubricating oil is sealed between an inner circumferential surface of a bushing and an outer circumferential surface of a connecting pin. The seal in such a chain comprises a ring that contacts an end surface of at least the bushing, and an elastic seal in pressing contact with the ring and an outer link plate facing the ring.

In the above-described conventional seal chain, in order to seal the lubricating oil between a pin and a bushing effectively, the ring member and elastic seal are pressed between the bushing and the outer link plate. The pressing force creates resistance to relative bending between the outer link plates and the inner link plates, and the result is an increased overall resistance of the chain to bending.

The bending resistance in the conventional chain can be reduced by surface finishing to decrease the roughness of the inner surfaces of an outer link plates and the end surfaces of the bushings. Surface finishing is also desirable in order to reduce wear of the ring and the elastic seal. However, need for surface finishing increases the cost of production of the chain.

Since the ring and the elastic seal are additional parts, the overall number of parts in the chain is increased, assembly of the chain is more difficult, and the need for these additional parts also increases the cost of production

Accordingly, an object of the invention is to solve the above-mentioned problems. The invention addresses these problems by providing an oil-free chain which achieves several objectives. First, it prevents leakage of lubricating oil and the invasion of external dust during the operation of the chain. Second, it suppresses wear between the outer circumferential surfaces of the connecting pins and the inner circumferential surfaces of the bushings so that wear elongation of the chain is prevented for a long period of time. Third, the number of chain parts is small in comparison with the number of parts in the above-described conventional seal chain, and the cost of production and difficulty of assembly and disassembly of the chain are reduced.

### SUMMARY OF THE INVENTION

The oil-free chain according to the convention is similar to a conventional roller chain or a conventional rollerless bushing chain in that it comprises pairs of inner plates and pairs of outer plates in alternating, overlapping relationship along the length of the chain. The inner plates have outer side surfaces, and the outer plates have inner side surfaces. A portion of the outer side surface of each inner plate is in overlapping relationship with a portion of the inner side surface of an outer plate. As in a conventional chain, a pair of bushings is provided for each pair of inner plates. The bushings have inner circumferential surfaces and are press-fit into bushing holes in the inner plates. As in a conventional chain, a pair of connecting pins is provided for each pair of outer plates. These pins have outer circumferential surfaces and are press-fit into pin holes in the outer plates. Each pin extends through, and fits loosely in, one of the bushings. As in a conventional seal chain, lubricating oil is sealed between the inner circumferential surfaces of each bushing and the outer circumferential surface of the connecting pin extending therethrough.

In accordance with one aspect of the invention, the chain departs from the conventional chain structure in that a labyrinth structure is formed between the overlapping portions of the outer side surfaces of the inner plates and the inner side surfaces of the outer plates. In a preferred embodiment, the overlapping portions of the outer side surfaces of the inner plates and the inner side surfaces of the outer plates have closely facing, rough surfaces, and the labyrinth structure is formed by these closely facing, rough surfaces. The labyrinth structure formed by the closely facing, rough surfaces retains lubricating oil and suppresses invasion of external dust.

In accordance with another aspect of the invention, each end portion of each bushing protrudes from the outer side surface of the inner plate in which it is press-fit, and extends into a bushing-supporting bore formed in the inner side surface of the overlapping outer plate. Each bushing-supporting bore in each outer plate is coaxial with one of the pin holes therein.

In accordance with still another aspect of the invention, each connecting pin has an oil retaining groove formed on its outer circumferential surface.

Preferably, the inner diameter Wj of each bushing supporting bore, the diameter Wbi of the inner circumferential surface of each bushing, the outer diameter Wbo of each bushing and the outer diameter Wp of each connecting pin, satisfy the relationship Wj - Wbo > Wbi- Wp.

Preferably, the depth Dj of each bushing supporting bore and the extent Db by which each bushing protrudes from the outer side surface of the inner plates in which it is press-fit satisfy the relationship Dj < Db. In addition, the distance Do between inner surfaces of the outer plates of each pair of outer plates, and the distance Di between the outer surfaces of the inner plates of each pair of inner plates preferabloy satisfy the relationship Dj + Do < Di + 2Db < 2Dj + Do.

Because lubricating oil is sealed between the inner circumferential surfaces of the bushings and the outer circumferential surfaces of the connecting pins, it is possible operate the chain as a drive chain for a long time without external lubrication.

The labyrinth structure suppresses leakage of lubricating oil caused by inertial forces and the like generated as the chain travels in a circulating path, and, at the same time suppresses the invasion of dust into interiors of the bushings, thereby preventing the dust from causing wear elongation of the chain.

The fit of the protruding portions of the bushings in the bushing supporting bores formed in the outer plates of the oil-free chain of the invention also produces a labyrinth structure that suppresses leakage of lubricating oil and the invasion of dust.

Since no seal member is pressed between the overlapping portions of the inner and outer plates of the chain as in a conventional seal chain, the chain can flex smoothly during its travel in a circulating path. In addition, the number of chain parts is small in comparison to the number of parts in a conventional seal chain, and surface finishing is unnecessary in order to achieve smooth flexing and to prevent wear of a sealing member. Therefore, production of the chain, and assembly and disassembly of the chain, are much easier and less expensive.

When oil retaining grooves are formed in the connecting pins, more lubricating oil can be sealed in the spaces between the pins and the bushings. Consequently sliding wear between the outer circumferential surface of the connecting pins and the inner circumferential surfaces of the bushings can be significantly reduced, and, as a result, the rate of wear elongation of the chain can be significantly reduced.

By utilizing closely facing rough surfaces of the inner and outer plates to forma labyrinth structure, an improved sealing effect can be achieved so that lubricating oil can be prevented from leaking out, and, at the same time, invasion of dust from the outside can be prevented.

When the relationship Wj - Wbo > Wbi - Wp is satisfied, even when a tensile force applied to the chain is such that the inner circumferential surface of a bushing and an outer circumferential surface of a connecting pin come into contact with each other, mutual contact between the outer circumferential surface of the protruding end of the bushing and the inner circumferential surface of a bushing supporting bore is prevented. As a result, there is no production of abrasive metal powder fromwear due to sliding contact between the outer circumferential surface of a protruding end of a bushing and the inner circumferential surface of a bushing supporting bore, and wear elongation of the chain due to the effects of such abrasive metal powder is prevented.

Where the depth Dj of the bushing supporting bore portion and the protrusion Db of the bushing beyond the outer side surface of the inner plate satisfy the relationship Dj < Db, even if the inner link becomes skewed, pivoted or biased with respect to the outer link during operation of the chain, the end surface of the bushing and the bottom surface of a bushing shaft support portion, which have small areas, come into contact with each other, and contact between the outer side surface of the inner plate and the inner side surface of the outer plate, which have comparativelhy large areas, is reliably prevented. Thus, smooth bend sliding of the chain for a long period of time can be realized.

Furthermore, when the relationship Dj + Do < Di + 2Db < 2Dj + Do is satisfied, even if an inner link becomes skewed, pivoted or biased with respect to an outer link in a widthwise direction during operation of the chain, the end portion of the bushing does not separate from the bushing supporting bore. Therefore, leakage of lubricating oil and invasion of external dust can be reliably prevented during operation of the chain, sliding wear between the outer circumferential surface of the connecting pin and the inner circumferential surface of the bushing can be reduced over a long period of time, and wear elongation of the chain can be further prevented.

### BRIEF DESCRIPTION OF THE DRAWINGS

FIG. 1 is a schematic view, partly in cross-section, of a part of the oil-free chain in accordance with a first embodiment of the invention;

FIG. 2 is a perspective view, partly in cross-section, illustrating the manner in which an inner link and an outer link of the chain are connected;

FIG. 3 is an enlarge cross-sectional view of a part of the oil-free chain shown in FIG. 1, including an enlarged auxiliary view showing details of overlapping, mutually facing, surfaces of the inner and outer plates of the chain;

FIG. 4 is a cross-sectional view of the chain of the first embodiment, showing dimensions of parts of the chain;

FIG. 5 is a plan view of the chain, partly in section, showing the chain in tension, and including an enlarge auxiliary view illustrating details of a part of the connection between the inner and outer links of the chain;

FIG. 6 is a plan view of the chain, partly in section, including two enlarge auxiliary views, showing an inner link biased in a widthwise direction;

FIG. 7 is a perspective view, partly in section, showing a portion of a chain according to a second embodiment of the invention; and

FIG. 8 is a cross-sectional view of a part of the chain of FIG. 7, including an enlarge auxiliary view showing details of overlapping, mutually facing, surfaces of the inner and outer plates of the chain.

### DETAILED DESCRIPTION OF THE PREFERRED EMBODIMENTS

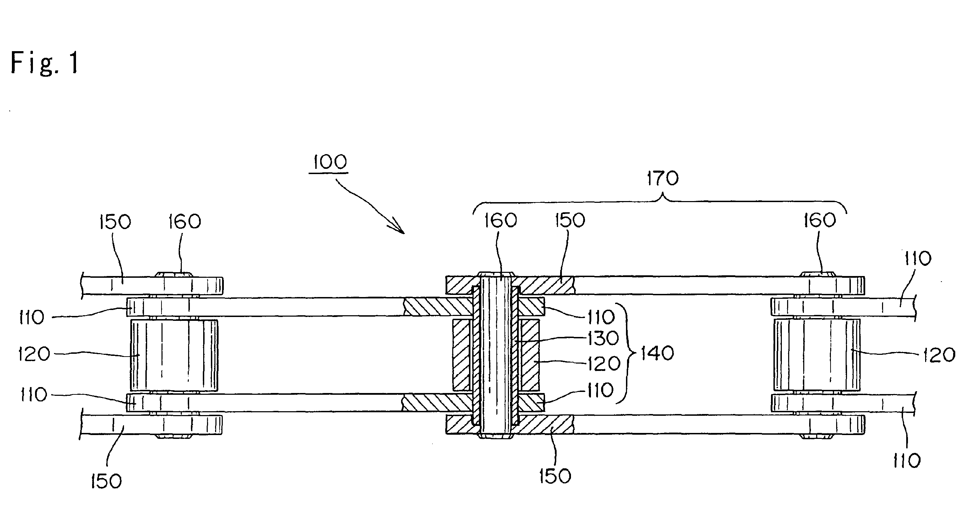

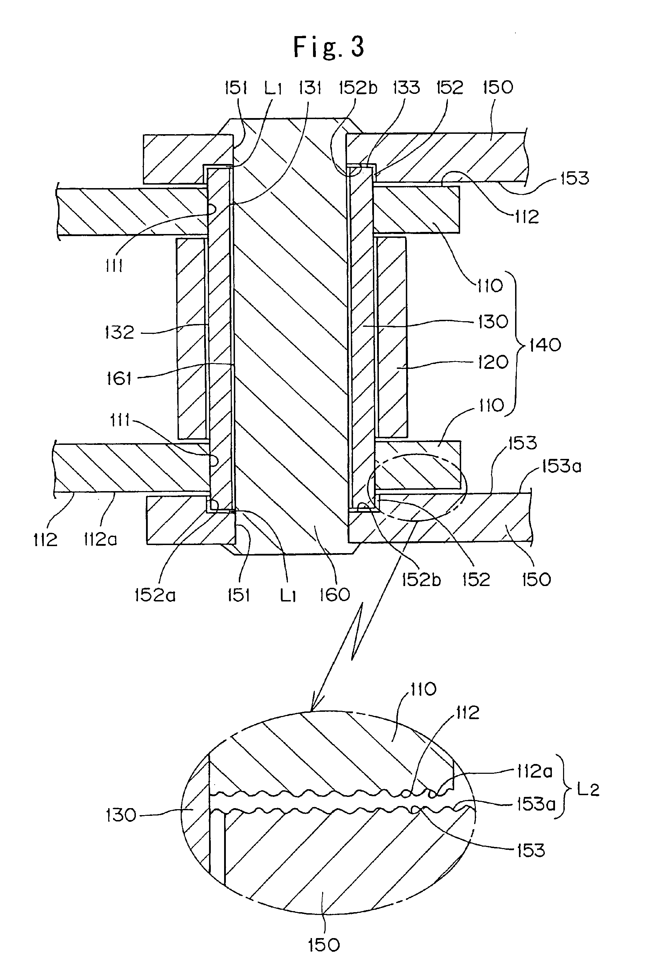

As shown in FIGs. 1 and 3, a wear resistant and heat resistant, oil-free conveyor chain 100 according to a first embodiment of the invention, includes an inner link 140 and outer links 170. In the inner link 140, the ends of a pair of bushings 130, on which rollers 120 fit loosely, are press-fit into holes 111 in a pair of spaced inner plates 110. In the outer links 170, both ends of a pair of connecting pins 160 are press-fit into holes 151 of a pair of spaced outer plates 150.

The inner and outer links 140 are connected by virtue of the fact that each connecting pin 160 loosely fits into a bushing 130. Lubricating oil is sealed between the bushing 130 and the connecting pin 160.

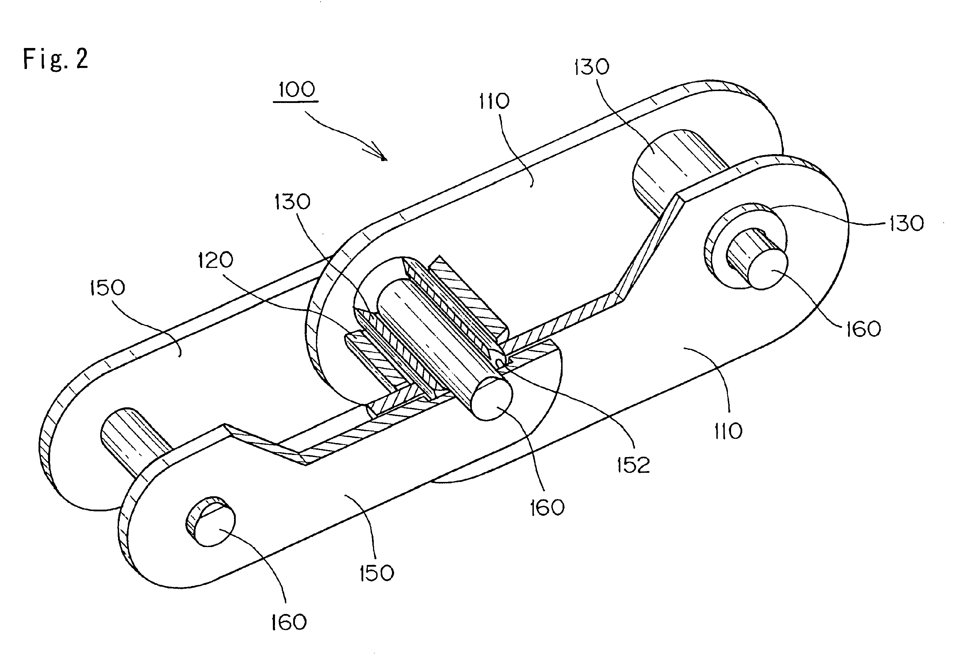

As shown in FIGs. 2 and 3, bushing supporting bores 152 are formed on the inner side surfaces 153 the outer plates 150. These bushing supporting bores are open to their full diameter at the inside-facing surfaces of the outer plates, and each bore 152 is coaxial with a pin-receiving hole 151 formed in an outer plate. The ends of each bushing 130 protrude from the outer side surfaces 112 of the inner plates 110, and are received in, and supported by the bushing supporting bores 152.

As shown in the auxiliary enlargement which is part of FIG. 3, the overlapping parts of the inner surface 153 of the outer plate 150, and the outer surface 112 of the inner plate 110, have a matte-finish forming rough surfaces 153a and 112a respectively, which cooperate to form a labyrinth structure L2.

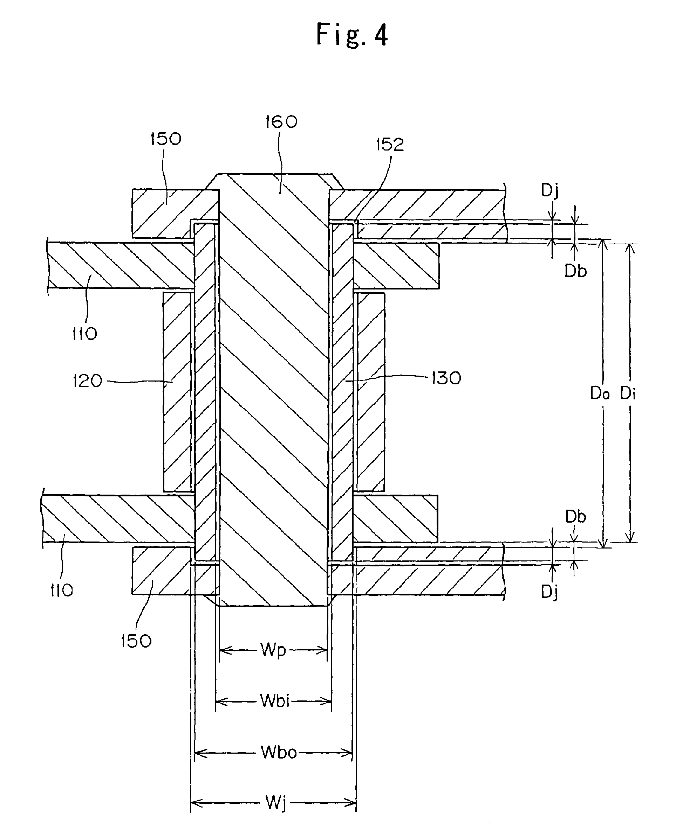

As shown in FIG. 4, the inner diameter Wj of the bushing supporting bore 152, the inner diameter Wbi of the bushing 130, the outer diameter Wbo of the bushing 130, and the outer diameter Wp of the connecting pin 160, are formed so that they satisfy the relationship Wj - Wbo > Wbi - Wp.

FIG. 4 also shows that the bushing 130 protrudes from the outer surface of inner plate 110 by an amount Db, which exceeds the depth Dj of the bushing support bore 152. That is, Dj < Db.

The depth Dj of the bushing supporting bore 152, the amount Db of protrusion of the bushing 130 from the outer side surface of the inner plate 110, the spacing Do between the inside faces of the plates of the outer link 170, and the spacing Di of the outside faces of the plates of the inner link 140, are formed so that they satisfy the relationship Dj + Do < Di + 2Db < 2Dj + Do.

As shown in FIG. 3, in the chain 100, since the protruding ends of each bushing 130 extend into the bushing supporting bores 152 in the inner sides 153 of the outer plates 150, a labyrinth structure L1 is formed between an end portion of each bushing 130 and the inner surface of a bushing supporting bore 152. This labyrinth structure prevents leakage of lubricating oil due to inertial forces generated during circulating travel of the chain. The sealed lubricating oil, guided by an inner circumferential surface of the bushing 130 tends to ooze outward toward the outer plates 150. However, the bent lubricant leakage path resulting from the cooperative relationship between the protruding ends of the bushings and the bushing supporting bores resists leakage of oil to the outside. At the same time, the labyrinth structure prevents the invasion of dust from the outside.

The chain 100 does not require additional seal members compressed between the inner plates 110 and the outer plates 150. Therefore, the chain can flex more smoothly than a conventional seal chain, and has the additional advantage that it has smaller number of the parts so that assembly of the chain is less expensive, and connection and disconnection of the chain are made easier.

Moreover, surface finishing to reduced the roughness of the plates in order to prevent wear of seal members is not needed. The avoidance of surface finishing also contributes to the low production cost of the chain.

The labyrinth structure L2, formed by the closely facing rough surfaces 153a and 112a, shown in FIG. 3, further improves the sealing effect of the chain, both preventing lubricating oil from leaking out, and preventing invasion of dust from outside the chain.

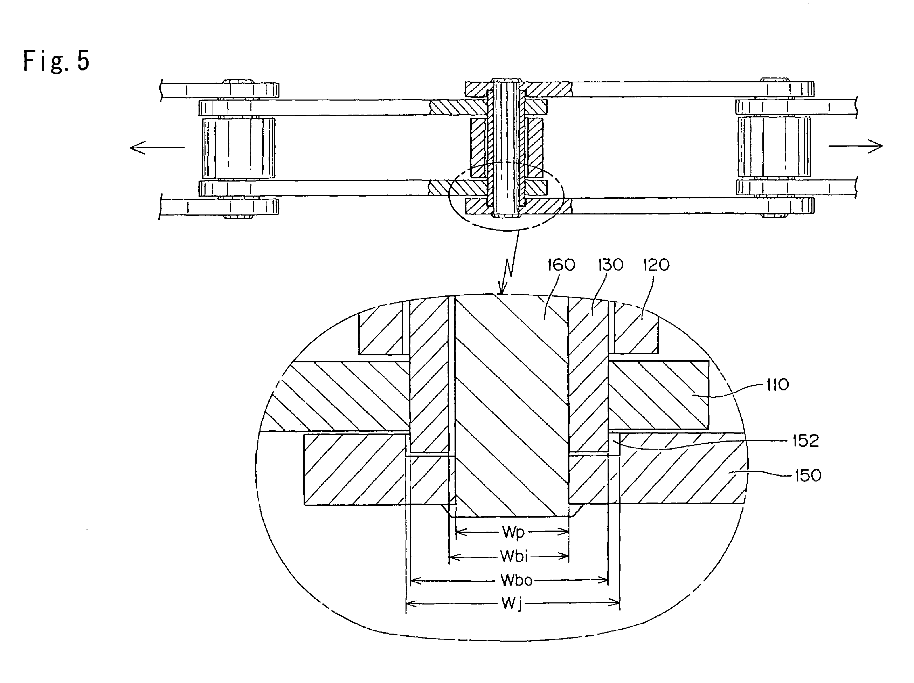

When the relationship Wj - Wbo > Wbi - Wp is satisfied, as shown the auxiliary enlargement of a portion of FIG. 5, even if a high degree of tension in the chain biases an inner link with respect to an outer link, the inner circumferential surface 131 (FIG. 3) of the bushing and the outer circumferential surface of the connecting pin 160 (FIG. 3) come into contact with each other before the outer circumferential surface of the end of a bushing can contact the inner circumferential surface 152a (FIG. 3) of a bushing supporting bore 152. Contact between the outer circumferential surface of an end portion of a bushing and the inner circumferential surface of a bushing supporting bore is entirely prevented. As a result, even if the supply of lubricating oil is inadequate, generation of metal powder by wear due to sliding contact between the outer circumferential surface of end portion of a bushing and the inner circumferential surface of a bushing supporting bore is avoided, and metal powder does not invade the space between the connecting pin and the bushing to cause abrasion, abnormal wear, and undesirable wear elongation of the chain.

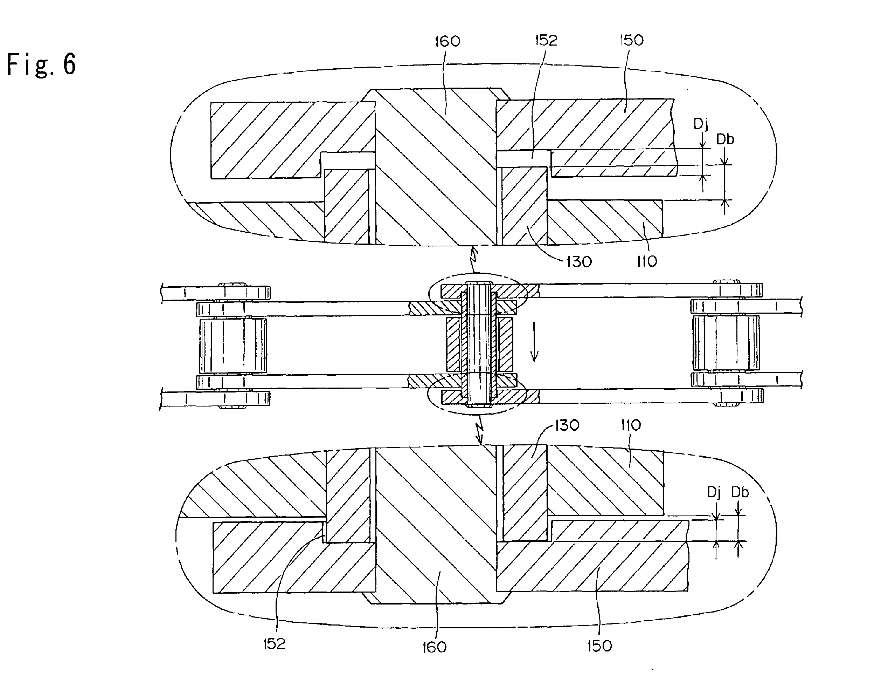

Referring to FIGs. 3, 4 and 6, if the relationship Dj < Db is satisfied, even if an inner link 140 becomes skewed, pivoted or biased with respect to an outer link 170, an end surface 133 (FIG. 3) of the bushing and a bottom surface 152b (FIG. 3) of a bushing supporting bore 152 come into contact with each other. The end of the bushing and the bottom of the bore 152 have relatively small sliding areas compared to the areas of the mutually facing surfaces of the inner and outer plates. Because the ends of the bushings come into contact with the bottoms of the bores 152 before the inner and outer plates can come together, sliding contact between the mutually facing surfaces of the inner and outer plates is prevented as shown in FIG. 6. Thus, smooth bending of the chain over a long period of time can be realized.

Again referring to FIGs. 3, 4 and 6, when the relationship Dj + Do < Di + 2Db < 2Dj + Do is satisfied. even if an inner link 140 becomes skewed, pivoted or biased in a widthwise direction with respect to an outer link 170, the protruding end of the bushing 130 cannot separate from the bushing supporting bore 152. Therefore, leakage of lubricating oil and invasion of external dust can be more reliably prevented during operation of the chain, and wear between the outer circumferential surface 161 of the connecting pin 160 and the inner circumferential surface 131 of the bushing 130 can be reduced over a long period of time so that wear elongation of the chain can be prevented.
In the second embodiment of the invention, shown in FIGs . 7 and 8, a wear-resistant and heat-resistant, oil-free chain 200 includes an inner link 240 and an outer link 270. In the inner link 240, rollers 220 are loosely fitted on bushings 230. The ends of each bushing 230 are press-fit into holes 211 of a pair of inner plates 210. In the outer link 270, both ends of a pair of connecting pins 260 are press-fit into holes 251 of a pair of outer plates 250.

The inner links 240 and the outer links 270 are connected by virtue of the fact that each connecting pin 260 extends through a bushing 230. Lubricating oil is sealed between each bushing 230 and the connecting pin 260 extending through the bushing.

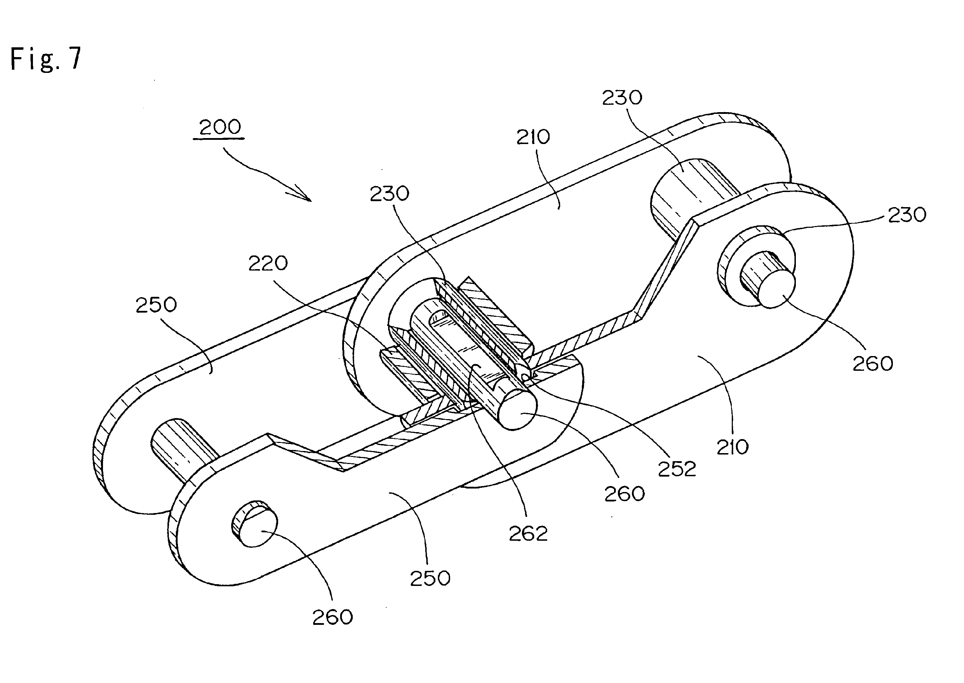

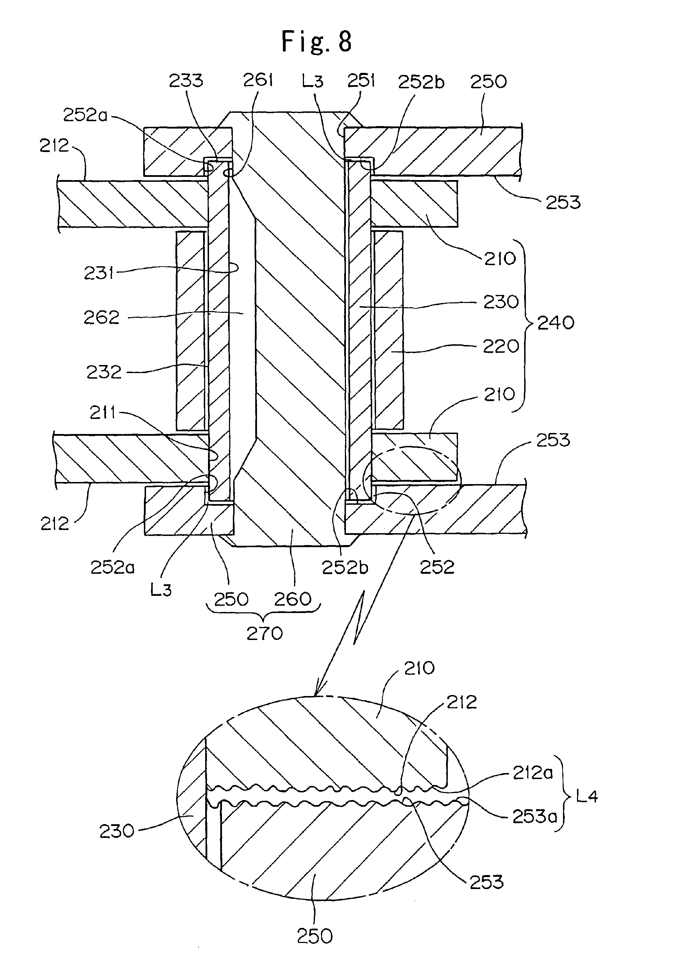

As shown in FIGs. 7 and 8, bushing support bores 252 are formed on the inner side surfaces 253 the outer plates 250. The bores are open to their full diameter at the inside-facing surfaces of the outer plates, and each bore 252 is coaxial with a pin-receiving hole 251 formed in an outer plate. The ends of each bushing 230 protrude from the outer side surfaces 212 of the inner plates 210, and are received in, and supported by, the bushing supporting bores 252.

As shown in the auxiliary enlargement which is part of FIG. 8, the overlapping parts of the inner surface 253 of the outer plate 250, and the outer surface 212 of the inner plate 210, both have a matte-finish, forming rough surfaces 253a and 212a respectively, which cooperate to form a labyrinth structure L4. As shown in the main part of FIG. 8, a D-shaped oil retaining groove 262 is provided on the outer circumferential surface of the connecting pin 260.

As in the first embodiment, the inner diameter Wj of the bushing supporting bore 252, the inner diameter Wbi of the bushing 230, the outer diameter Wbo of the bushing 230, and the outer diameter Wp of the connecting pin 260 satisfy the relationship Wj - Wbo > Wbi - Wp.

Moreover, as in the first embodiment, the bushing 230 protrudes from the outer surface 212 of inner plate 210 by an amount Db, which exceeds the depth Dj of the bushing support bore 252. That is, Dj < Db.

As in the first embodiment, the depth Dj of the bushing supporting bore 252, the amount Db of protrusion of the bushing 230 from the outer side surface of the inner plate 210, the spacing Do between the inside faces of the plates of the outer link 270, and the spacing Di of the outside faces of the plates of the inner link 120, are formed so that they satisfy the relationship Dj + Do < Di + 2Db < 2Dj + Do.

As shown in FIG. 8, in the chain according to the second embodiment of the invention, since the protruding ends of each bushings 230 extend into the bushing supporting bores 252 in the inner sides 253 of the outer plates 250, a labyrinth structure L3 is formed between an end portion of each bushing 230 and the inner surface of a bushing supporting bore 252. This labyrinth structure prevents leakage of lubricating oil due to inertial forces generated during circulating travel of the chain. The sealed lubricating oil, guided by an inner circumferential surface of the bushing 230 tends to ooze outward toward the outer plates 250. However, the bent lubricant leakage path resulting from the cooperative relationship between the protruding ends of the bushings and the bushing supporting bores prevents leakage of oil to the outside. At the same time, the labyrinth structure prevents the invasion of dust from the outside.

The chain 200 does not require additional seal members compressed between the inner plates 210 and the outer plates 250. Therefore, the chain can flex more smoothly than a conventional seal chain, and has the additional advantage that it has smaller number of the parts so that assembly of the chain is less expensive, and connection and disconnection of the chain are made easier.

Moreover, surface finishing to reduced the roughness of the plates in order to prevent wear of seal members is not needed. The avoidance of surface finishing also contributes to the low production cost of the chain.

In the second embodiment, the oil retaining groove 262 formed on the outer surface of the connecting pin holds lubricating oil for lubricating the mutually sliding inner circumferential surface 231 of the bushing 230 and outer circumferential surface 261 of the connecting pin 260.
The additional lubricating oil capacity afforded by the groove 262 ensures that sliding wear between the outer circumferential surface 261 of the connecting pin 260 and the inner circumferential surface 231 of the bushing 230 can be reduced over a long period of time so that wear elongation of the chain can be prevented.

The labyrinth structure L4, formed by the closely facing rough surfaces 253a and 212a, shown in the auxiliary enlargement of part of FIG. 8, further improve the sealing effect of the chain, both preventing lubricating oil from leaking out, and preventing invasion of dust from the outside.

As in the case of the first embodiment, since the relationship Wj - Wbo > Wbi - Wp is satisfied, contact between the outer circumferential surface of an end portion of a bushing and the inner circumferential surface of a bushing supporting bore is entirely prevented. As a result, even if the supply of lubricating oil is inadequate, generation of metal powder by wear due to sliding contact between the outer circumferential surface of end portion of a bushing and the inner circumferential surface of a bushing supporting bore is avoided, and metal powder does not invade the space between the connecting pin and the bushing to cause abrasion, abnormal wear, and undesirable wear elongation of the chain.

As in the first embodiment, since the relationship Dj < Db is satisfied, even if an inner link 240 becomes skewed, pivoted or biased with respect to an outer link 270, an end surface 233 (FIG. 8) of the bushing and a bottom surface 252b (FIG. 8) of a bushing supporting bore 252 come into contact with each other. The end of the bushing and the bottom of the bore 252 have relatively small sliding areas compared to the areas of the mutually facing surfaces of the inner and outer plates. Because the ends of the bushings come into contact with the bottoms of the bores 252 before the inner and outer plates can come together, sliding contact between the mutually facing surfaces of the inner and outer plates is prevented. Thus, smooth bending of the chain over a long period of time can be realized.

In the second embodiment, as in the first embodiment, the relationship Dj + Do < Di + 2Db < 2Dj + Do is also satisfied. As a result, even if an inner link 240 becomes skewed, pivoted or biased in a widthwise direction with respect to an outer link 270, the protruding end of the bushing 230 cannot separate from the bushing supporting bore 252. Therefore, leakage of lubricating oil and invasion of external dust can be more reliably prevented during operation of the chain, and wear between the outer circumferential surface 261 of the connecting pin 260 and the inner circumferential surface 231 of the bushing 230 can be reduced over a long period of time so that wear elongation of the chain can be prevented.

The invention may be embodied in a roller chain or a rollerless bushing chain. However, in a roller chain, engagement between the chain and a sprocket is smoother and less wear occurs. Thus, the roller chain is preferable.

Various modifications can be made to the chains according to the invention. For example, the oil-retaining grooves in the connecting pins can be annular grooves formed in the outer surfaces of the connecting pins. However, the D-shaped groove is preferable since it enables a large amount of lubricating oil to be sealed within the chain while maintaining the strength of the connecting pin.

The shape of the bushing supporting bore is preferably circular, but any of various alterative shapes, such as a regular polygon, can be adopted.

Various other modifications can be made to the embodiments described without departing from the scope of the invention as defined in the following claims.

## Claims

1. An oil-free chain (100; 200) comprising:
pairs of inner plates (110; 210) and pairs of outer plates (150; 250) in alternating, overlapping relationship along the length of the chain (100; 200), the inner plates (110; 210) having outer side surfaces (112; 212) and the outer plates (150; 250) having inner side surfaces (153; 253), a portion of the outer side surface (112; 212) of each inner plate (110; 210) being in overlapping relationship with a portion of the inner side surface (153; 253) of an outer plate (150; 250);
a pair of bushings (130; 230) for each pair of inner plates (110; 210), the bushings (130; 230) having inner circumferential surfaces (131; 231) and being press-fit into bushing holes (111; 211) in the inner plates (110; 210);
a pair of connecting pins (160; 260) for each pair of outer plates (150; 250), each pin (160; 260) having an outer circumferential surface (161; 261) and being press-fit into pin holes (151; 251) in the outer plates (150; 250) and extending through, and fitting loosely in, one of said bushings (130; 230);
lubricating oil sealed between the inner circumferential surfaces (131; 231) of each bushing (130; 230) and the outer circumferential surface (161; 261) of the connecting pin (160; 260) extending therethrough,
wherein the improvement comprises a labyrinth structure (L2; L4) formed between the overlapping portions of the outer side surfaces (112; 212) of the inner plates (110; 210) and the inner side surfaces (153; 253) of the outer plates (150; 250).

2. An oil-free chain (100; 200) comprising:
pairs of inner plates (110; 210) and pairs of outer plates (150; 250) in alternating, overlapping relationship along the length of the chain (100; 200), the inner plates (110; 210) having outer side surfaces (112; 212) and the outer plates (150; 250) having inner side surfaces (153; 253), a portion of the outer side surface (112; 212) of each inner plate (110; 210) being in overlapping relationship with a portion of the inner side surface (153; 253) of an outer plate (150; 250);
a pair of bushings (130; 230) for each pair of inner plates (110; 210), the bushings (130; 230) having inner circumferential surfaces (131; 231) and end portions (133; 233), and being press-fit into bushing holes (111; 211) in the inner plates (110; 210);
a pair of connecting pins (160; 260) for each pair of outer plates (150; 250), each pin (160; 260) having an outer circumferential surface (161; 261) and being press-fit into pin holes (151; 251) in the outer plates (150; 250) and extending through, and fitting loosely in, one of said bushings (130; 230);
lubricating oil sealed between the inner circumferential surfaces (131; 231) of each bushing (130; 230) and the outer circumferential surface (161; 261) of the connecting pin (160; 260) extending therethrough,
wherein each end portion (133; 233) of each bushing (130; 230) protrudes from the outer side surface (112; 212) of the inner plate (110; 210) in which it is press-fit, and extends into a bushing-supporting bore (152; 252) formed in the inner side surface (153; 253) of the overlapping outer plate (150; 250), each said bushing-supporting bore (152; 252) in each outer plate (150; 250) being coaxial with a pin hole (151; 251) therein.

3. An oil-free chain (200) according to claim 2, having an oil retaining groove (262) formed on the outer circumferential surface (261) of each connecting pin (260).

4. An oil-free chain (100; 200) according to claim 2, further comprising a labyrinth structure (L2; L4) formed between the overlapping portions of the outer side surfaces (112; 212) of the inner plates (110; 210) and the inner side surfaces (153; 253) of the outer plates (150; 250).

5. An oil free chain (100; 200) according to claim 4, in which said overlapping portions of the outer side surfaces (112; 212) of the inner plates (110; 210) and the inner side surfaces (153; 253) of the outer plates (150; 250) have closely facing, rough, surfaces (112a, 153a; 212a, 253a), and in which said labyrinth structure (L2; L4) is formed by said closely facing, rough, surfaces (112a, 153a; 212a, 253a).

6. An oil-free chain (200) according to claim 3, further comprising a labyrinth structure (L4) formed between the overlapping portions of the outer side surfaces (212) of the inner plates (210) and the inner side surfaces (253) of the outer plates (250).

7. An oil free chain (200) according to claim 6, in which said overlapping portions of the outer side surfaces (212) of the inner plates (210) and the inner side surfaces (253) of the outer plates (250) have closely facing, rough, surfaces (212a, 253a), and in which said labyrinth structure (L4) is formed by said closely facing, rough, surfaces (212a, 253a).

8. An oil-free chain (100; 200) according to any one of claims 2 to 7, in which the inner diameter Wj of each said bushing supporting bore (152; 252), the diameter Wbi of the inner circumferential surface (131; 231) of each bushing (130; 230), the outer diameter Wbo of each bushing (130; 230) and the outer diameter Wp of each connecting pin (160; 260) satisfy the relationship Wj - Wbo > Wbi - Wp.

9. An oil-free chain (100; 200) according to any one of claims 2 to 8, in which the depth Dj of each bushing supporting bore (152; 252) and the extent Db by which each bushing (130; 230) protrudes from the outer side surface (112; 212) of the inner plates (110; 210) in which it is press-fit satisfy the relationship Dj < Db, and the depth Dj of each bushing supporting bore (152; 252), the extent Db by which each bushing (130; 230) protrudes from the outer side surface (112; 212) of the inner plates (110; 210) in which it is press-fit, the distance Do between inner surfaces (153; 253) of the outer plates (150; 250) of each pair of outer plates (150; 250), and the distance Di between the outer surfaces (112; 212) of the inner plates (110; 210) of each pair of inner plates (110; 210) satisfy the relationship Dj + Do < Di + 2Db < 2Dj + Do.
